# EUROPEAN PATENT APPLICATION

(11) **EP 4 769 520 A1**
(43) Date of publication of application: **01.07.2026**
(21) Application number: 25224327.4
(22) Date of filing: 17.12.2025
(51) Int. Cl.: H01M 4/131, H01M 4/525, H01M 10/0525, C01G 53/04

(54) **POSITIVE ELECTRODE ACTIVE MATERIALS, POSITIVE ELECTRODES, AND RECHARGEABLE LITHIUM BATTERIES**

(30) Priority: 24.12.2024 KR 20240196242; 10.12.2025 KR 20250195583
(71) Applicant: SAMSUNG SDI CO., LTD., Yongin-si, Gyeonggi-do 17084 (KR)
(72) Inventor: HAN, Jihyun, 17084 Yongin-si (KR)
(74) Representative: Maiwald GmbH

(57) **Abstract**

A positive electrode active material may include a first positive electrode active material comprising a first lithium transition metal composite oxide and having an average particle diameter D₅₀ from 9 µm to 20 µm and may comprise a second positive electrode active material comprising a second lithium transition metal composite oxide and having an average particle diameter D₅₀ from 1 µm to 8 µm. A particle diameter D₂₀ of the positive electrode active material may be from 1.0 µm to 5.0 µm.

## Description

### BACKGROUND

### 1. Field

The present disclosure provides positive electrode active materials, positive electrodes including positive electrode active materials, and rechargeable lithium batteries including positive electrodes having positive electrode active materials.

### 2. Description of the Related Art

A portable information device such as a cell phone, a laptop, smart phone, and the like or an electric vehicle has used a rechargeable lithium battery (having high energy density and easy portability) as a driving power source. Recently, research has been actively conducted to use a rechargeable lithium battery with high energy density as a driving power source or power storage source for hybrid or electric vehicles.

Various positive electrode active materials have been investigated to create usable rechargeable lithium batteries. In the recent rapidly increasing demand for large-sized, high-capacity, or high-energy-density rechargeable lithium batteries, there is a need to develop positive electrode active materials that ensure stability while increasing capacity, enabling operation at high voltages and having high plate density and improved capacity per volume.

### SUMMARY

The present disclosure provides a positive electrode active material capable of realizing high density, high capacity, long cycle-life characteristics and high energy density, provides a positive electrode having said positive electrode active material, and a rechargeable lithium battery including a positive electrode having said positive electrode active material.

A positive electrode active material according to some embodiments of the present disclosure may include a first positive electrode active material including a first lithium transition metal composite oxide and having an average particle diameter D₅₀ from about 9 µm to about 20 µm; and a second positive electrode active material including a second lithium transition metal composite oxide and having an average particle diameter D₅₀ from about 1 µm to about 8 µm. A particle diameter D₂₀ of the positive electrode active material may be from about 1.0 µm to about 5.0 µm.

In some embodiments, the first lithium transition metal composite oxide and the second lithium transition metal composite oxide may be each independently a lithium nickel-based composite oxide.

In some embodiments, the lithium nickel-based composite oxide may include a nickel content of greater than or equal to about 80 mol% based on 100 mol% of a total metal content excluding lithium.

In some embodiments, the lithium nickel-based composite oxide may be represented by Chemical Formula 1:

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1. M1 and M2 may each independently be one or more elements selected from Al, B, Ba, Ca, Ce, Co, Cr, Cu, Fe, Mg, Mn, Mo, Nb, Si, Sn, Sr, Ti, V, W, Y, Zn, and Zr. M1 and M2 may include different elements. X may include one or more elements selected from F, P, and S.

In some embodiments, the first positive electrode active material may have secondary particles including a plurality of primary particles that may be agglomerated.

In some embodiments, the second positive electrode active material may have single particles or may have secondary particles including a plurality of primary particles that may be agglomerated.

In some embodiments, D₁₀ of the positive electrode active material may be from about 0.5 µm to about 3.0 µm.

In some embodiments, D₉₀ of the positive electrode active material may be from about 15 µm to about 25 µm.

In some embodiments, a ratio D₉₀/D₂₀ of the positive electrode active material may be from about 2.8 to about 19.

In some embodiments, D₅₀ of the positive electrode active material may be from about 10 µm to about 16 µm.

In some embodiments, the first positive electrode active material may be included in an amount from about 60 wt% to about 80 wt% based on a total of 100 wt% of the first positive electrode active material and the second positive electrode active material. The second positive electrode active material may be included in an amount from about 20 wt% to about 40 wt% based on a total of 100 wt% of the first positive electrode active material and the second positive electrode active material.

In some embodiments, a pellet density of the positive electrode active material may be from about 3.3 g/cc to about 3.8 g/cc.

A positive electrode according to some embodiments of the present disclosure may include a current collector and a positive electrode active material layer including the positive electrode active material, the positive electrode active material layer being positioned on the current collector.

In some embodiments, a density of the positive electrode active material layer may be from about 3.3 g/cc to about 4.3 g/cc.

In some embodiments, a loading level of the positive electrode active material layer may be from about 5 mg/cm² to about 70 mg/cm².

In some embodiments, a thickness of the positive electrode active material layer may be from about 5 µm to about 200 µm.

In some embodiments, a capacity per volume of the positive electrode may be from about 500 mAh/cc to about 1500 mAh/cc.

A rechargeable lithium battery according to some embodiments of the present disclosure may include the positive electrode, a negative electrode, and an electrolyte.

The positive electrode active material according to some embodiments may maximize battery capacity while minimizing production cost of the battery, thereby ensuring long cycle-life characteristics of the battery and improving high-voltage characteristics and high-temperature storage characteristics of the battery. A rechargeable lithium battery using the above-mentioned positive electrode active material may exhibit high initial charge/discharge capacity and high efficiency even under high-voltage driving conditions, may realize high energy density due to a high mixture density of the positive electrode, and may realize long cycle-life characteristics.

### BRIEF DESCRIPTION OF THE DRAWINGS

FIG. 1 schematically shows a rechargeable lithium battery according to some embodiments of the present disclosure.
FIG. 2 schematically shows a rechargeable lithium battery according to some embodiments of the present disclosure.
FIG. 3 schematically shows a rechargeable lithium battery according to some embodiments of the present disclosure.
FIG. 4 schematically shows a rechargeable lithium battery according to some embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe embodiments only and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like.

Terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, a thickness of layers, films, panels, regions, etc., are exaggerated for clarity and like reference numerals designate like elements throughout the specification. When an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

An average particle diameter may be measured by a method well known to those skilled in the art, for example, by a particle size analyzer or by a transmission electron microscope image or a scanning electron microscope image. Alternatively, it is possible to obtain an average particle diameter value by using a dynamic light scattering method for obtaining measurements, by performing data analysis, by counting the number of particles for each particle size range, and/or by calculating from measurements obtained from the aforementioned methods. Unless otherwise defined, the average particle diameter may mean the diameter D₅₀ of particles having a cumulative volume of 50 volume% in the particle size distribution. As used herein, when a definition is not otherwise provided, the average particle diameter means a diameter D₅₀ of particles having a cumulative volume of 50 volume% in the particle size distribution that is obtained by measuring the size (diameter or major axis length) from about 20 particles at random in a scanning electron microscope image.

The particle diameter D₁₀ of particles having a cumulative volume of 10 volume% in the particle size distribution is obtained by using a particle size analyzer to determine a particle size distribution and taking the diameter of particles having a cumulative volume of 10 volume% in the particle size distribution as the D₁₀. The particle diameter D₂₀ of particles having a cumulative volume of 20 volume% in the particle size distribution is obtained by using a particle size analyzer to determine a particle size distribution and taking the diameter of particles having a cumulative volume of 20 volume% in the particle size distribution as the D₂₀. The particle diameter D₉₀ of particles having a cumulative volume of 90 volume% in the particle size distribution is obtained by using a particle size analyzer to determine a particle size distribution and taking the diameter of particles having a cumulative volume of 90 volume% in the particle size distribution as the D₉₀.

"Or" is not to be construed as an exclusive meaning, for example, "A or B" is construed to include A, B, and A+B.

"Metal" is interpreted as a concept including ordinary metals, transition metals, and metalloids (semi-metals).

### Positive Electrode Active Material

In some embodiments, a positive electrode active material includes a first positive electrode active material including a first lithium transition metal composite oxide and having an average particle diameter D₅₀, i.e., having a cumulative volume of 50 volume% in the particle size distribution, being from about 9 µm to about 20 µm; and a second positive electrode active material including a second lithium transition metal composite oxide and having an average particle diameter D₅₀ from about 1 µm to about 8 µm. For a particle size distribution measured using laser diffraction such as LS13320, a pump speed may be 55%, ultrasonic dispersion may be performed at 40 KHz for 30 seconds, a run length may be 60 seconds, a refractive index may be 1.6, an e-factor may be 1.00, a sample amount may be 0.20 g, and a dispersant added to the sample may be 1 ml of 10% sodium hexametaphosphate for the positive electrode active material, the particle diameter D₂₀ of the positive electrode active material, i.e., having a cumulative volume of 20 volume% in the particle size distribution, is from about 1.0 µm to about 5.0 µm.

In the positive electrode including a positive electrode active material containing a lithium transition metal composite oxide, a design has been proposed to maximize capacity and energy density and to implement long cycle-life characteristics by mixing large and small particles. The positive electrode is generally manufactured by applying and drying a positive electrode composition including a positive electrode active material onto a current collector and then compressing it. The positive electrode including the large particles and small particles may experience problems such as the large particles being broken, cracked, or a surface of the large particles being damaged during the compressing process. Accordingly, repeated charging and discharging of the battery may accelerate a deterioration of the large particles, leading to a problem of reduced cycle-life characteristics. Accordingly, in some embodiments, the synthesis conditions of the large particles and the small particles are controlled, and the particle size distribution is controlled by finely controlling a composition, a size, and a mixing ratio of the particles, and the particle diameter D₂₀ according to the particle size distribution is controlled to increase a plate density and to suppress deterioration of the large particles, thereby proposing a design that maximizes the capacity and energy density of the battery and implements long cycle-life characteristics.

According to some embodiments, a positive electrode active material includes a first positive electrode active material and a second positive electrode active material, wherein the first positive electrode active material includes a first lithium transition metal composite oxide, and the second positive electrode active material includes a second lithium transition metal composite oxide. The first positive electrode active material may be represented as large particles, and the second positive electrode active material may be represented as small particles. The first lithium transition metal composite oxide and the second lithium transition metal composite oxide may be the same or different. Examples of the lithium transition metal composite oxide include lithium nickel-based oxide, lithium cobalt-based oxide, lithium manganese-based oxide, a lithium iron phosphate-based compound, cobalt-free lithium nickel-manganese-based oxide, lithium-manganese-rich composite oxide, or a combination thereof, and the compounds represented by any one of the following chemical formulas may be used.

LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCOG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

In some embodiments, the first lithium transition metal composite oxide and the second lithium transition metal composite oxide may independently be a lithium nickel-based composite oxide, and the lithium nickel-based composite oxide may be represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, and M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr. M¹ and M² may be different elements. X is F, P, S, or a combination thereof.

In Chemical Formula 1, 0.6≤x1≤1, 0≤y1≤0.4, and 0≤z1≤0.4, or 0.8≤x1≤1, 0≤y1≤0.2, and 0≤z1≤0.2, or 0.9≤x1<1, 0<y1≤0.1, and 0≤z1≤0.1.

The lithium nickel-based composite oxide may be represented by Chemical Formula 2 or Chemical Formula 3 as a specific example.

[Chemical Formula 2] Liₐ₂Niₓ₂Co_{y2}M³_{z2}O_{2-b2}X_{b2}

In Chemical Formula 2, 0.9≤a2≤1.2, 0.8≤x2<1, 0<y2≤0.2, 0≤z2≤0.2, 0.9≤x2+y2+z2≤1.1, and 0≤b2≤0.1, M³ is one or more elements selected from Al, B, Ba, Ca, Ce, Cr, Cu, Fe, Mg, Mn, Mo, Nb, Si, Sn, Sr, Ti, V, W, Y, Zn, and Zr, and X is F, P, S, or a combination thereof.

In Chemical Formula 2, 0.9≤x2≤0.99, 0.01≤y2≤0.1, and 0≤z2≤0.1 may be satisfied.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.2, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1; M⁴ is Al, Mn, or a combination thereof; M⁵ is one or more elements selected from B, Ba, Ca, Ce, Cr, Cu, Fe, Mg, Mo, Nb, Si, Sn, Sr, Ti, V, W, Y, Zn, and Zr; and X is F, P, S, or a combination thereof.

In Chemical Formula 3, 0.9≤x3≤0.98, 0.01≤y3≤0.09, 0.01≤z3≤0.09, and 0≤w3≤0.09 may be satisfied.

The nickel-based composite oxide may be a high-nickel-based positive electrode active material in which the nickel content may be greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of the total metal excluding lithium in the lithium nickel-based composite oxide. The high-nickel positive electrode active materials may achieve high capacity in batteries and, thus, may be applied to high-capacity, high-density rechargeable lithium batteries.

The first positive electrode active material including the first lithium transition metal composite oxide is in the form of particles, and the particles may be in the form of secondary particles in which a plurality of primary particles are agglomerated. The secondary particles may be spherical, ellipsoidal, polyhedral, or irregularly shaped, and the primary particles forming the secondary particles may be spherical, ellipsoidal, plate-shaped, or a combination thereof.

The second positive electrode active material including the second lithium transition metal composite oxide is in the form of particles, and the particles may be in a form of secondary particles in which a plurality of primary particles are agglomerated, in a form of single particles, or in a form of a combination thereof. The secondary particles and single particles may be spherical, ellipsoidal, polyhedral, or irregularly shaped, and the primary particles forming the secondary particles may be spherical, ellipsoidal, plate-shaped, or a combination thereof.

In some embodiments, the single particles may exist alone without a grain boundary within the particle, may be composed of one particle, and/or may be a monolith structure, a one body structure, and/or a non-agglomerated particle in which particles are not agglomerated with each other but exist as an independent phase in terms of morphology and may be expressed as a one body particle or single grain (for example, as a single crystal).

In some embodiments, the single particles may be agglomerated together. For example, 2 to 10 single particles may be agglomerated and in contact with each other.

An average particle diameter D₅₀ of the first positive electrode active material is from about 9 µm to about 20 µm and may be, for example, from about 10 µm to about 18 µm, or from about 12 µm to about 16 µm. The average particle diameter D₅₀ may be obtained by using a particle size analyzer (PSA) for the first positive electrode active material to obtain a particle size distribution and by taking a diameter of particles having a cumulative volume of 50 volume% in the particle size distribution as the average particle diameter.

An average particle diameter D₅₀ of the second positive electrode active material may be from about 1 µm to about 8 µm, for example, from about 1.5 µm to about 7 µm, or from about 2 µm to about 6 µm. The average particle diameter D₅₀ may be obtained by using a particle size analyzer to obtain a particle size distribution for the second positive electrode active material and by taking a diameter of particles having a cumulative volume of 50 volume% in the particle size distribution as the average particle diameter.

Particle size analysis of the positive electrode active material may be performed using a particle size analyzer using laser diffraction, such as LS13320 (Beckmann Coulter). As particle size analysis conditions, a pump speed may be 55%, ultrasonic dispersion may be performed at 40 KHz for 30 seconds, a run length may be 60 seconds, a refractive index may be 1.6, an e-factor may be 1.00, a sample amount may be 0.20 g, and a dispersant added to the sample may be 1 ml of 10% sodium hexametaphosphate.

D₂₀ of the positive electrode active material may be from about 1.0 µm to about 5.0 µm, for example, from about 2.0 µm to about 5.0 µm, from about 1.0 µm to about 4.0 µm, from about 2.0 µm to about 4.0 µm, from about 2.5 µm to about 4.0 µm, from about 2.0 µm to about 3.0 µm, from about 2.5 µm to about 3.0 µm, or from about 3.0 µm to about 4.0 µm. D₂₀ may be obtained by using a particle size analyzer to determine a particle size distribution for all of the positive electrode active materials including the first positive electrode active material and the second positive electrode active material, and taking the diameter of particles having a cumulative volume of 20 volume% in the particle size distribution as the D₂₀. According to some embodiments, when the value of D₂₀ for the total positive electrode active material satisfies the above range while including the first positive electrode active material and the second positive electrode active material, a density of the positive electrode active material layer may be maximized while deterioration of the large particles (the first positive electrode active material) due to charge and discharge may be suppressed, and thus, a capacity of the rechargeable lithium battery may be increased while simultaneously improving energy density and cycle-lifee characteristics of the rechargeable lithium battery.

Aparticle diameter D₁₀ of the positive electrode active material, i.e., having a cumulative volume of 10 volume% in the particle size distribution, may be from about 0.5 µm to about 3.0 µm, for example, from about 1.0 µm to about 3.0 µm, from about 1.0 µm to about 2.0 µm, from about 2.0 µm to about 3.0 µm, from about 1.5 µm to about 3.0 µm, from about 1.7 µm to about 3.0 µm, or from about 1.7 µm to about 2.0 µm. D₁₀ may be obtained by using a particle size analyzer to determine a particle size distribution for all of the positive electrode active materials including the first positive electrode active material and the second positive electrode active material, and taking the diameter of particles having a cumulative volume of 10 volume% in the particle size distribution as the D₁₀.

Aparticle diameter D₉₀ of the positive electrode active material, i.e., having a cumulative volume of 90 volume% in the particle size distribution, may be from about 15 µm to about 25 µm, for example, from about 16 µm to about 23 µm, from about 15 µm to about 20 µm, from about 15 µm to about 17 µm, or from about 16 µm to about 19 µm. D₉₀ may be obtained by using a particle size analyzer to determine a particle size distribution for all of the positive electrode active materials, including the first positive electrode active material and the second positive electrode active material, and by taking the diameter of particles having a cumulative volume of 90 volume% in the particle size distribution as the D₉₀.

The ratio D₉₀/D₂₀ of the positive electrode active material may be from about 2.8 to about 19, for example, from about 3 to about 16, from about 4 to about 14, from about 5 to about 12, from about 5.4 to about 10.2, from about 3.7 to about 8.3, from about 5 to about 7, from about 5.3 to about 6.7, or from about 6 to about 7.

When D₂₀, D₁₀, D₉₀, and the ratio D₉₀/D₂₀ of the positive electrode active material are within the ranges discussed above, the density of the positive electrode active material layer including the positive electrode active material increases, thereby realizing a high energy density, and exhibiting high initial charge/discharge capacity and efficiency even under high-voltage driving conditions, and slowing down the deterioration rate of the first positive electrode active material that has large particles, thereby improving the cycle-life characteristics.

An average particle diameter D₅₀ of the positive electrode active material may be from about 10 µm to about 16 µm, for example, from about 10.5 µm to about 11.5 µm or from about 12.0 µm to about 15.5 µm. D₅₀ may be obtained by using a particle size analyzer to determine a particle size distribution for all of the positive electrode active materials including the first positive electrode active material and the second positive electrode active material, and by taking a diameter of particles having a cumulative volume of 50 volume% in the particle size distribution as the average particle diameter.

Meanwhile, in the particle size distribution for the positive electrode active material, the cumulative volume of particles having a particle size smaller than about 3 µm may be less than or equal to about 30% and may be, for example, from about 5% to about 25% or from about 10% to about 20%. Additionally, the cumulative volume of particles having a particle size smaller than about 5 µm may be less than or equal to about 50%, for example, from about 15% to about 45% or from about 25% to about 40%.

In some embodiments, the first positive electrode active material may be included in an amount from about 60 wt% to about 80 wt%, for example, form about 60 wt% to about 75 wt%, from about 65 wt% to about 80 wt% or from about 70 wt% to about 80 wt%, and the second positive electrode active material may be included in an amount from about 20 wt% to about 40 wt%, for example, from about 25 wt% to about 40 wt%, from about 20 wt% to about 35 wt%, or from about 20 wt% to about 30 wt%, based on a total of 100 wt% of the first positive electrode active material and the second positive electrode active material. When the amount ratio of the first positive electrode active material and the second positive electrode active material is as described above, the positive electrode active material including it can realize high capacity, can improve composite density, and can exhibit high energy density.

The pellet density of the positive electrode active material may be from about 3.3 g/cc to about 3.8 g/cc, for example, from about 3.35 g/cc to about 3.65 g/cc, or from about 3.4 g/cc to about 3.6 g/cc. The positive electrode according to some embodiments may realize a high pellet density and may thus realize a high capacity and a high energy density. The pellet density was measured as follows. 3 g of the positive active materials were respectively weighed and put in a mold (an area: 1.298 cm²), and a mold bar was slowly put into the mold main body. The mold set was put under a hydraulic press and pressed with a pressure of 3 tons (metric tons) for 30 seconds, and the height thereof was measured to evaluate the pellet density.

### Positive Electrode

In some embodiments, a positive electrode includes a current collector and a positive electrode active material layer on the current collector, wherein the positive electrode active material layer includes the aforementioned positive electrode active material. The positive electrode active material layer may further include other types of positive electrode active materials in addition to the aforementioned positive electrode active material. Additionally, the positive electrode active material layer may optionally further include a binder, a conductive material, or a combination thereof.

According to some embodiments, a loading level of the positive electrode active material layer may be from about 5 mg/cm² to about 70 mg/cm², for example, from about 10 mg/cm² to about 60 mg/cm² or from about 20 mg/cm² to about 50 mg/cm². Additionally, a mixture density of the positive electrode active material layer in the finally compressed positive electrode may be from about 3.3 g/cc to about 4.3 g/cc, for example, from about 3.5 g/cc to about 4.1 g/cc or from about 3.7 g/cc to about 3.9 g/cc. When applying a positive electrode active material according to some embodiments, it is advantageous to implement the aforementioned loading level and the aforementioned density of the positive electrode active material layer, and a positive electrode satisfying the loading level and the mixture density within the above ranges is suitable for achieving a high-capacity, high-energy-density rechargeable lithium battery.

The thickness of the positive electrode active material layer may be from about 5 µm to about 200 µm, for example, from about 5 µm to about 180 µm or from about 10 µm to about 150 µm. When the thickness of the positive electrode active material layer satisfies the above range, a high-capacity and high-energy density battery can be realized.

A capacity per volume of the positive electrode may be from about 500 mAh/cc to about 1500 mAh/cc, for example, from about 700 mAh/cc to about 1300 mAh/cc or from about 900 mAh/cc to about 1100 mAh/cc. The positive electrode according to some embodiments can realize excellent energy density by implementing a capacity per volume within the above ranges.

### Binder

The binder improves binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but a binder is not limited thereto.

A conductive material is included to provide electrode conductivity, and, in some embodiments, any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or any combination thereof.

Each amount of the binder and the conductive material may be from about 0.5 wt% to about 5 wt%, based on 100 wt% of the positive electrode active material layer.

The positive electrode current collector may include an Al thin film, but the positive electrode current collector is not limited thereto.

### Rechargeable Lithium Battery

Some embodiments provide a rechargeable lithium battery including the aforementioned positive electrode, the aforementioned negative electrode, and the aforementioned electrolyte. The rechargeable lithium battery may include a positive electrode, a negative electrode, a separator disposed between the positive electrode and the negative electrode, and an electrolyte solution.

The rechargeable lithium battery may be classified into cylindrical, prismatic, pouch, coin, etc. depending on the shape.

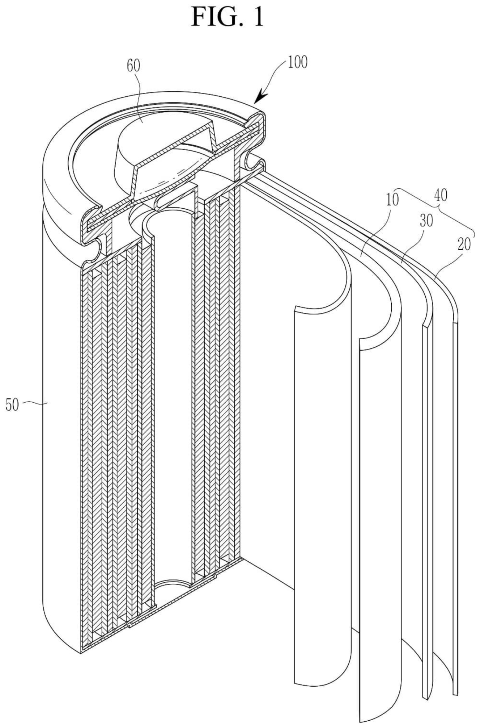

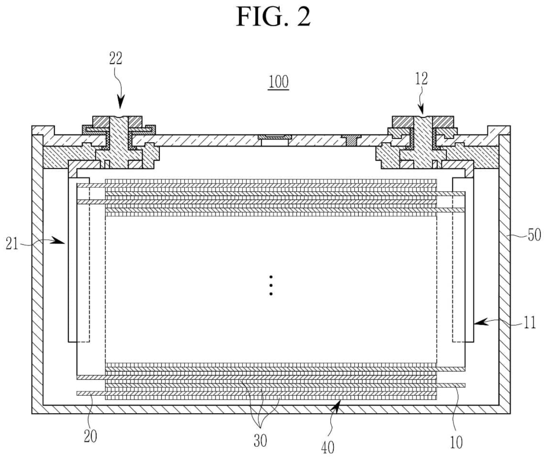

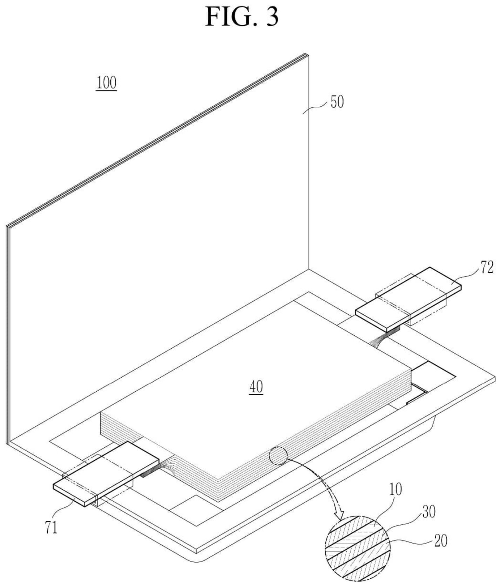

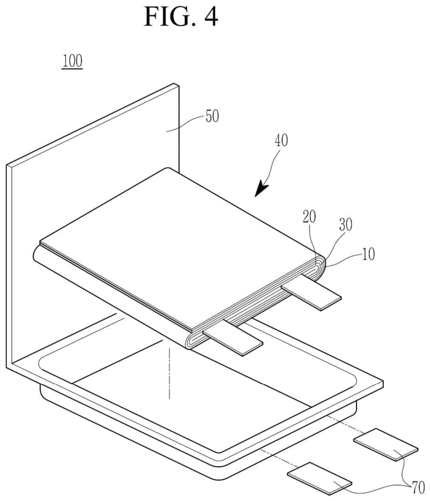

FIGS. 1 to 4 are schematic views showing the rechargeable lithium battery according to some embodiments of the present disclosure. Particularly, FIG. 1 is a cylindrical battery, FIG. 2 is a prismatic battery, and FIGS. 3 and 4 are each a pouch-shaped battery.

A rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes one or more electrode tabs 70, such as, for example, a positive electrode tab 71 and a negative electrode tab 72, serving as an electrical path for inducing the current formed in the electrode assembly 40 to the outside.

### Negative Electrode

The negative electrode may include a current collector and a negative electrode active material layer on the current collector and may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, an Sn alloy, or a combination thereof.

The silicon-carbon composite may be a composite of silicon and amorphous carbon. An average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. In some embodiments, the silicon-carbon composite may include a core, including crystalline carbon and silicon particles, and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, an amount of silicon may be from about 10 wt% to about 50 wt% and an amount of amorphous carbon may be about 50 wt% to about 90 wt% based on 100 wt% of the silicon-carbon composite. In addition, if the composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may exist as silicon alone, in the form of a silicon alloy or in an oxidized form. The oxidized form of silicon may be represented by SiOₓ (0<x≤2). The atomic content ratio of Si:O, which indicates a degree of oxidation, may be from about 99:1 to about 33:67. As used herein, when a definition is not otherwise provided, an average particle diameter D₅₀ indicates a diameter of particle where a cumulative volume is about 50 volume% in a particle size distribution.

The Si-based negative electrode active material or Sn-based negative electrode active material may be mixed with the carbon-based negative electrode active material. When the Si-based negative electrode active material or the Sn-based negative electrode active material and the carbon-based negative electrode active material are mixed and used, the mixing ratio may be a weight ratio from about 1:99 to about 90:10.

### Binder

The binder serves to adhere the negative electrode active material particles to each other well and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be from about 95 wt% to about 99.5 wt% based on 100 wt% of the negative electrode active material layer, and an amount of the binder may be from about 0.5 wt% to about 5 wt% based on 100 wt% of the negative electrode active material layer. The negative electrode active material layer may include from about 90 wt% to about 99 wt% of the negative electrode active material, from about 0.5 wt% to about 5 wt% of the binder, and from about 0.5 wt% to about 5 wt% of the conductive material.

### Current Collector

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof and may be in the form of a foil, sheet, or foam. A thickness of the current collector may be, for example, from about 1 µm to about 20 µm, from about 5 µm to about 15 µm, or from about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes; and the like.

The non-aqueous organic solvent may be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve battery cycle life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide; LiFSI, LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range from about 0.1 M to about 2.0 M. If the concentration of lithium salt is within the above range, the electrolyte solution has appropriate ion conductivity and viscosity, and, thus, excellent performance can be achieved, and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, TEFLON^{®}, and polytetrafluoroethylene, or the porous substrate may be a copolymer including two of a same polymer selected from the aforementioned polymers or including mixture of two or more different polymers of the aforementioned polymers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

The thickness of the coating layer may be from about 0.5 µm to about 20 µm, for example, from about 1 µm to about 10 µm or from about 1 µm to about 5 µm.

Examples and comparative examples of the present disclosure are described below; however, the present disclosure is not limited to the following examples.

### Example 1

### 1. Preparation of the First Positive Electrode Active Material

### (1) Preparation of Positive Electrode Active Material Precursor

A positive electrode active material precursor (Ni_{0.91}Co_{0.08}Al_{0.01}(OH)₂) was obtained according to the co-precipitation method described below.

As raw materials for the positive electrode active material precursor, nickel sulfate (NiSO₄·6H₂O), cobalt sulfate (CoSO₄·7H₂O), and aluminum sulfate (Al₂(SO₄)₃·H₂O) were dissolved in distilled water as a solvent in a molar ratio of 91:8:1 to prepare a mixed solution. A diluted aqueous ammonia solution (NH₄OH) was prepared for complex formation, and sodium hydroxide (NaOH) was prepared as a precipitating agent. The metal raw material mixed solution, diluted aqueous ammonia solution, and sodium hydroxide were then respectively fed into the reactor. Sodium hydroxide was added to maintain the pH in the reactor. Subsequently, the reaction was carried out under stirring for approximately 20 hours, after which the feed of the precursor solution was stopped.

The solution in the reactor was filtered and washed with high-purity distilled water, and then dried in a hot-air oven at 190 °C for 24 hours to obtain a Ni_{0.91}Co_{0.08}Al_{0.01}(OH)₂ having an average particle diameter D₅₀ of 17.0 µm.

### (2). Preparation of the First Positive Electrode Active Material

Ni_{0.91}Co_{0.08}Al_{0.01}(OH)₂ having an average particle diameter D₅₀ of 17.0 µm and LiOH were mixed in a molar ratio of 1:1 and then heat-treated from 400 °C to 800 °C under an oxygen atmosphere to prepare a first positive electrode active material having a composition of LiNi_{0.91}Co_{0.08}Al_{0.01}O₂ in a form of secondary particles having an average particle diameter D₅₀ of 15.5 µm. Herein, the heat treatment was performed by increasing the temperature to 400 °C at 1 °C/min and maintaining it at 400 °C for 5 hours and then increasing the temperature to 800 °C at 2 °C/min and maintaining the temperature at 800 °C for 10 hours. Subsequently, the temperature was decreased at 5 °C/min, and the oxygen atmosphere was maintained at an oxygen concentration of 95% or more.

### 2. Preparation of the Second Positive Electrode Active Material

A positive electrode active material precursor was manufactured substantially in a same method as in "Preparation of Positive Electrode Active Material Precursor" except that changing the drying step from drying in a hot-air oven at 190 °C for 24 hours to drying in a hot-air oven at 210 °C for 24 hours to obtain a Ni_{0.91}Co_{0.08}Al_{0.01}(OH)₂ having an average particle diameter D₅₀ of 4.5 µm.

A second positive electrode active material having a composition of Li_{1.02}Ni_{0.91}Co_{0.08}Al_{0.01}O₂ in a form of secondary particles with an average particle diameter D₅₀ of 3.5 µm was prepared by mixing Ni_{0.91}Co_{0.08}Al_{0.01}(OH)₂ having an average particle diameter D₅₀ of 4.5 µm and LiOH in a molar ratio of 1:1.02 and then heat-treating the mixture under an oxygen atmosphere. The heat treatment was performed by increasing the temperature to 400 °C at 1 °C/min and maintaining the temperature at 400 °C for 5 hours and then increasing the temperature to 845 °C at 2 °C/min and maintaining the temperature at 845 °C for 10 hours. Then, the temperature was decreased at 5 °C/min, and the oxygen atmosphere was maintained at a concentration of 95% or higher.

70 wt% of the first positive electrode active material and 30 wt% of the second positive electrode active material were mixed to prepare a positive electrode active material. And then, Air Classifying Mill (ACM) was performed under a mill of 50.3 Hz, a Sepa of 15 Hz, and an air flow rate of 30 m³/min. The positive electrode active material was measured with respect to a particle distribution by using a laser diffraction method, in which D₁₀ was 1.8 µm, D₂₀ was 2.7 µm, and D₉₀ was 16.2 µm.

### 2. Manufacturing of Rechargeable Lithium Battery Cell

98.5 wt% of the prepared positive electrode active material, 1.0 wt% of a polyvinylidene fluoride binder, and 0.5 wt% of a carbon nanotube conductive material were mixed to prepare a positive electrode active material layer slurry, and the slurry was coated on an aluminum foil current collector and then dried and compressed to manufacture a positive electrode.

The positive electrode was used with a lithium metal counter electrode as a negative electrode, a polytetrafluoroethylene separator, and an electrolyte solution prepared by dissolving 1 M LiPF₆ in a mixed solvent of ethylene carbonate and dimethyl carbonate in a volume ratio of 3:7 to manufacture a rechargeable lithium battery cell.

### Example 2

A positive electrode active material and a rechargeable lithium battery cell were manufactured substantially in a same method as in Example 1 except that air classifying mill was performed under a mill of 50.3 Hz, a Sepa of 18 Hz, and an air flow rate of 35 m³/min. So, the positive electrode active material was prepared to have D₁₀ of 1.6 µm, D₂₀ of 2.2 µm, and D₉₀ of 22.5 µm, such measurements being obtained via evaluating a particle distribution via the laser diffraction method.

### Example 3

A positive electrode active material and a rechargeable lithium battery cell were manufactured substantially in a same method as in Example 1 except that air classifying mill was performed under a mill of 48.1 Hz, a Sepa of 13 Hz, and an air flow rate of 32 m³/min. So, the positive electrode active material was prepared to have D₁₀ of 2.5 µm, D₂₀ of 3.5 µm, and D₉₀ of 18.9 µm, such measurements being obtained via evaluating a particle distribution via the laser diffraction method.

### Comparative Example 1

A positive electrode active material and a rechargeable lithium battery cell were manufactured substantially in a same method as in Example 1 except that air classifying mill was performed under a mill of 35.2 Hz, a Sepa of 10 Hz, and an air flow rate of 28 m³/min. So, the positive electrode active material was prepared to have D₁₀ of 3.5 µm, D₂₀ of 7.7 µm, and D₉₀ of 17.4 µm, such measurements being obtained via evaluating a particle distribution via the laser diffraction method.

### Comparative Example 2

A positive electrode active material and a rechargeable lithium battery cell were manufactured substantially in the same method as in Example 1 except that air classifying mill was performed under a mill of 36.1 Hz, a Sepa of 11 Hz, and an air flow rate of 25 m³/min. So, the positive electrode active material was prepared to have D₁₀ of 3.7 µm, D₂₀ of 5.7 µm, and D₉₀ of 13.5 µm, such measurements being obtained via evaluating a particle distribution via the laser diffraction method.

The positive electrode active materials according to the examples and the comparative examples were measured with respect to D₁₀, D₂₀, D₅₀ and D₉₀, and the results are shown in Table 1. D₁₀, D₂₀, D₅₀ and D₉₀ were measured by using LS13320 (Beckmann Coulter, Inc.) as a particle size analyzer (PSA) using laser diffraction under conditions of a pump speed of 55%, a 40 KHz ultrasonic wave dispersion of 30s, a run length of 60s, a refractive index (RI) of 1.6, an e-factor of 1.00, a sample amount of 0.20 g, and 1 ml of 10% sodium hexametaphosphate as a sample input dispersant.

### Evaluation Example 1: Density of Positive Electrode Active Material Layer

Densities of the positive electrode active material layers in the compressed positive electrodes manufactured in the examples and the comparative examples were measured, which is shown in Table 1.

**Table 1**

| | D₁₀ (µm) | D₂₀ (µm) | D₅₀ (µm) | D₉₀ (µm) | D₉₀/ D₂₀ | Density of positive electrode active material layer (g/cc) |
|---|---|---|---|---|---|---|
| Example 1 | 1.8 | 2.7 | 12.7 | 16.2 | 6.0 | 4.15 |
| Example 2 | 1.6 | 2.2 | 13.1 | 22.5 | 10.2 | 3.82 |
| Example 3 | 2.5 | 3.5 | 12.8 | 18.9 | 5.4 | 4.04 |
| Comparative Example 1 | 3.5 | 7.7 | 12.5 | 17.4 | 2.3 | 3.57 |
| Comparative Example 2 | 3.7 | 5.7 | 12.2 | 13.5 | 2.4 | 3.64 |

Referring to Table 1, the positive electrode active material layers of the examples show high densities. In particular, Example 1 having D₁₀ of 1.8 µm, D₂₀ of 2.7 µm, and D₉₀/D₂₀ of 6.0 is found to have the highest positive electrode active material layer density.

### Evaluation Example 2: Initial Charge/Discharge Capacity and Efficiency

The rechargeable lithium battery cells (half-cells) according to the examples and the comparative examples were charged to an upper limit voltage of 4.3 V at a constant current of 0.2 C and to 0.05 C at the constant voltage and then were discharged to a cutoff voltage of 3.0 V at 0.2 C at 25 °C to proceed with initial charging and discharging. In Table 2, below, initial charge capacity, initial discharge capacity, and a ratio of the latter to the former (i.e., efficiency) are shown. In addition, the initial discharge capacity was multiplied by the density of the positive electrode active material layer to calculate a capacity per volume, which is also shown in Table 2.

### Evaluation Example 3: High-temperature Cycle Life

After the initial charge and discharge of Evaluation Example 2, the cells were charged at 1.0 C for 50 cycles or more within a voltage range of 3.0 V to 4.3 V at 45 °C to calculate a ratio of 50^{th} cycle discharge capacity to the initial discharge capacity, which is shown in Table 2.

**Table 2**

| | 0.2 C initial charge capacity (mAh/g) | 0.2 C initial discharge capacity (mAh/g) | Effici ency (%) | Capacity per volume (mAh/cc) | High-temperature cycle life (%, 45 °C, 50 cyc) |
|---|---|---|---|---|---|
| Example 1 | 242.7 | 212.5 | 87.6 | 881.88 | 98.0 |
| Example 2 | 241.6 | 211.2 | 87.4 | 806.78 | 97.1 |
| Example 3 | 242.4 | 212.1 | 87.5 | 856.88 | 97.7 |
| Comparative Example 1 | 239.8 | 208.8 | 87.1 | 745.42 | 96.1 |
| Comparative Example 2 | 241.2 | 210.8 | 87.4 | 767.31 | 96.9 |

Referring to Table 2, the examples show a high initial discharge capacity, a high charging and discharging efficiency, and long high temperature cycle-life characteristics, and, in addition, the examples exhibit higher capacity per volume than the comparative examples and show improved energy density. In particular, Example 1 having D₁₀ of 1.8 µm, D₂₀ of 2.7 µm, and D₉₀/D₂₀ of 6.0 has the highest density of the positive electrode active material layer.

While this invention has been described in connection with what is presently considered to be practical embodiments, it is to be understood that the invention is not limited to the above embodiments. On the contrary, the present disclosure is intended to cover various modifications and equivalent arrangements that may be made by one skilled in the art.

### <Description of Symbols>

| | | | |
|---|---|---|---|
| 100: | rechargeable lithium battery | 30: | separator |
| 10: | positive electrode | 40: | electrode assembly |
| 11: | positive electrode lead tab | 50: | case |
| 12: | positive electrode terminal | 60: | sealing member |
| 20: | negative electrode | 70: | electrode tab |
| 21: | negative electrode lead tab | 71: | positive electrode tab |
| 22: | negative electrode terminal | 72: | negative electrode tab |

## Claims

1. A positive electrode active material comprising:
a first positive electrode active material comprising a first lithium transition metal composite oxide and having an average particle diameter D₅₀ from 9 µm to 20 µm; and
a second positive electrode active material comprising a second lithium transition metal composite oxide and having an average particle diameter D₅₀ from 1 µm to 8 µm,
wherein a particle diameter D₂₀ of the positive electrode active material is from 1.0 µm to 5.0 µm.

2. The positive electrode active material as claimed in claim 1, wherein the first lithium transition metal composite oxide and the second lithium transition metal composite oxide are each independently a lithium nickel-based composite oxide.

3. The positive electrode active material as claimed in claim 2, wherein the lithium nickel-based composite oxide comprises a nickel content of greater than or equal to 80 mol% based on 100 mol% of a total metal content excluding lithium.

4. The positive electrode active material as claimed in claim 2 or 3, wherein the lithium nickel-based composite oxide is represented by Chemical Formula 1:
wherein Chemical Formula 1 is:
Liₐ₁Niₓ₁M¹_{y1}M²_{z1}O_{2-b1}X_{b1}
where 0.9≤a1≤1.8, 0.3≤x1≤1, 0≤y1≤0.7, 0≤z1≤0.7, 0.9≤x1+y1+z1≤1.1, and 0≤b1≤0.1,
M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr,
M¹ and M² are different elements, and
X is one or more elements selected from F, P, and S.

5. The positive electrode active material as claimed in any one of claims 1 to 4, wherein the first positive electrode active material has secondary particles comprising a plurality of primary particles that are agglomerated.

6. The positive electrode active material as claimed in any one of claims 1 to 5, wherein the second positive electrode active material has single particles or has secondary particles comprising a plurality of primary particles that are agglomerated.

7. The positive electrode active material as claimed in any one of claims 1 to 6, wherein D₁₀ of the positive electrode active material is from 0.5 µm to 3.0 µm.

8. The positive electrode active material as claimed in any one of claims 1 to 7, wherein D₉₀ of the positive electrode active material is from 15 µm to 25 µm; and/or wherein a ratio D₉₀/D₂₀ of the positive electrode active material is from 2.8 to 19; and/or wherein D₅₀ of the positive electrode active material is from 10 µm to 16 µm.

9. The positive electrode active material as claimed in any one of claims 1 to 8, wherein the first positive electrode active material is included in an amount from 60 wt% to 80 wt% based on a total of 100 wt% of the first positive electrode active material and the second positive electrode active material, and
wherein the second positive electrode active material is included in an amount from 20 wt% to 40 wt% based on a total of 100 wt% of the first positive electrode active material and the second positive electrode active material.

10. The positive electrode active material as claimed in any one of claims 1 to 9, wherein the pellet density of the positive electrode active material is from 3.3 g/cc to 3.8 g/cc.

11. A positive electrode comprising:
a current collector; and
a positive electrode active material layer comprising the positive electrode active material as claimed in any one of claims 1 to 10, the positive electrode active material layer being positioned on the current collector.

12. The positive electrode as claimed in claim 11, wherein the density of the positive electrode active material layer is from 3.3 g/cc to 4.3 g/cc.

13. The positive electrode as claimed in claim 11 or 14, wherein the loading level of the positive electrode active material layer is from 5 mg/cm² to 70 mg/cm²; and/or wherein the thickness of the positive electrode active material layer is from 5 µm to 200 µm.

14. The positive electrode as claimed in any one of claims 11 to 13, wherein the capacity per volume of the positive electrode is from 500 mAh/cc to 1500 mAh/cc.

15. A rechargeable lithium battery comprising:
the positive electrode as claimed in any one of claims 11 to 14;
a negative electrode; and
an electrolyte.
